# EUROPEAN PATENT APPLICATION

(11) **EP 4 808 116 A1**
(43) Date of publication of application: **16.09.2026**
(21) Application number: 25305339.1
(22) Date of filing: 13.03.2025
(51) Int. Cl.: H04N 19/105, H04N 19/176, H04N 19/513, H04N 19/517, H04N 19/52, H04N 19/53, H04N 19/573

(54) **SPATIO-TEMPORAL MV CANDIDATE**

(71) Applicant: InterDigital CE Patent Holdings, SAS, 75017 Paris (FR)
(72) Inventor: BORDES, Philippe, 35890 LAILLE (FR); GALPIN, Franck, 35235 THORIGNE-FOUILLARD (FR); ROBERT, Antoine, 35140 MEZIERES SUR COUESNON (FR); REUZE, Kevin, 35700 RENNES (FR)
(74) Representative: Vossius & Partner Patentanwälte Rechtsanwälte mbB

(57) **Abstract**

Methods and apparatus are provided for refinement of a spatio-temporal motion vector candidate. In one embodiment, refining a temporal motion vector with forward projection is performed. In another embodiment, the refinement also comprises a backward projection with temporal motion vector predictor of a central point. In another embodiment, the refinement further comprises a temporal refinement. Another embodiment comprises the above embodiments and further comprising a set of positions to forward project defined in a collocated picture.

## Description

### TECHNICAL FIELD

At least one of the present embodiments generally relates to a method or an apparatus for the derivation of a temporal motion vector predictor.

### BACKGROUND

The general aspects described herein relate to approaches for video compression and decompression, and particularly to temporal motion vector predictors in video encoders and decoders.

### SUMMARY

At least one of the present embodiments generally relates to a method or an apparatus for improving the derivation of temporal motion vector predictors in compressing or decompressing video data.

According to a first aspect, there is provided a method. The method comprises steps for determining at least one position in a collocated picture from original positions around a central position in a block of a current picture using corresponding first temporal motion vectors; using at least one second temporal motion vector associated with the at least one position in the collocated picture to determine at least one new position in the current picture; determining distance costs between each of the at least one new position in the current picture and the corresponding central positions in the block of a current picture; determining a temporal motion vector from the at least one second temporal motion vector associated with the at least one new position in the current picture having a smallest of the determined distance costs; and, encoding the block using the determined temporal motion vector.

According to a second aspect, there is provided a method. The method comprises steps for determining at least one position in a collocated picture from original positions around a central position in a block of a current picture using corresponding first temporal motion vectors; using at least one second temporal motion vector associated with the at least one position in the collocated picture to determine at least one new position in the current picture; determining distance costs between each of the at least one new position in the current picture and the corresponding central positions in the block of a current picture; determining a temporal motion vector from the at least one second temporal motion vector associated with the at least one new position in the current picture having a smallest of the determined distance costs; and, decoding the block using the determined temporal motion vector.

According to another aspect, there is provided an apparatus. The apparatus comprises a processor and a memory. The processor can be configured to operate on video signals and data according to any of the aforementioned methods.

According to another general aspect of at least one embodiment, there is provided a device comprising an apparatus according to any of the decoding embodiments; and at least one of (i) an antenna configured to receive a signal, the signal including the video signal, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

### BRIEF DESCRIPTION OF THE DRAWINGS

Figure 1 is a block diagram illustrating an example system according to one or more embodiments of the present disclosure
Figure 2 illustrates a standard, generic, video compression scheme.
Figure 3 illustrates a standard, generic, video decompression scheme.
Figure 4 illustrates an example of (4a) neighboring blocks used in derivation of spatial motion vector candidates, and (4b) neighboring collocated block (BR).
Figure 5 illustrates a motion vector re-scaling for TMVP.
Figure 6 illustrates temporal motion vectorrefining .
Figure 7 illustrates examples of non-homogeneous collocated motion fields.
Figure 8 illustrates temporal refinement of TMVP.
Figure 9 illustrates several positions around the central position in the current frame used to derive temporal motion vector candidate according to one embodiment (emb-1).
Figure 10 illustrates backward and forward projection for refining TMVP.
Figure 11 illustrates a method for a combination of spatial and temporal refinement.

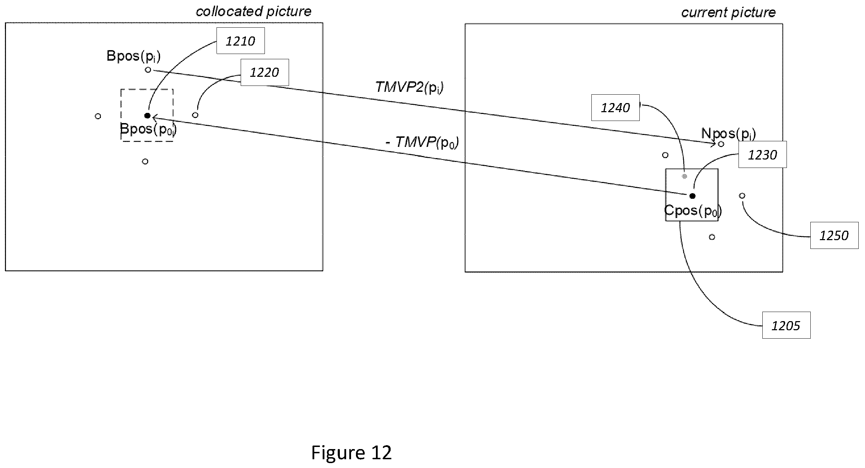

Figure 12 illustrates another implementation of backward projection of central position and forward projection of several points in the collocated picture for deriving TMVP.
Figure 13 illustrates one embodiment of a method under the described aspects
Figure 14 illustrates another embodiment of a method under the described aspects.
Figure 15 illustrates a processor-based system for encoding/decoding under the general described aspects.

### DETAILED DESCRIPTION

The embodiments described here are in the field of video compression. To achieve high compression efficiency, image and video coding schemes usually employ block-based prediction, including motion vector prediction, and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

In the HEVC (High Efficiency Video Coding) video compression standard, motion compensated temporal prediction is employed to exploit the redundancy that exists between successive pictures of a video.

### Temporal motion information derivation

In inter-prediction, the prediction of the current block is built with motion compensation of a reference block with same size in the reference picture. The position of the reference block in the reference picture is determined with a motion vector MV which is the relative position of the reference block in the reference picture versus the position of the current block in the current picture.

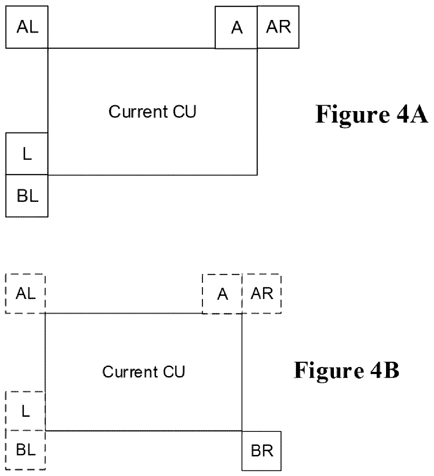

A list of MV candidates is composed of spatial candidates, history candidates and temporal candidates typically, and an index is signaled to indicate which MV candidate should be used. The spatial candidates are derived from previously reconstructed blocks in the neighborhood of the current block, at pre-determined relative positions (for example, Figure4A). The history candidates are derived from previously reconstructed blocks.

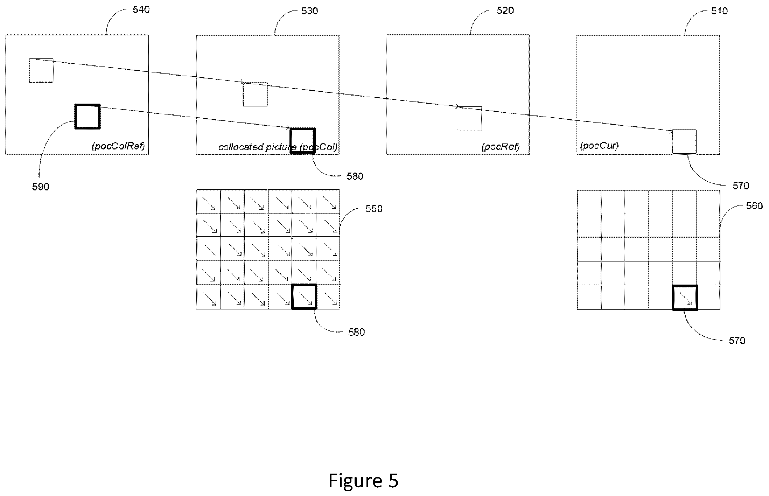

The temporal motion vector candidate (TMVP) is derived from Mv (580) used to reconstruct another block situated at the same position (580) as the current block (570) (or slightly displaced relative to the current block center, e.g., BR in Figure 4b) but in one signaled collocated reference picture (colPic)(530), assuming that the motion remains constant over time and in space locally. Since the temporal distance between the current picture (pocCur) and the current reference picture (pocRef), and the collocated picture (pocCol) and the reference used for reconstructing the collocated block (pocColRef) may be different, the motion vector MvCol of the collocated block may be re-scaled (Figure 5): $TMVP = \left(pocCur-pocRef\right) * MvCol / \left(pocCol-pocColRef\right)$

In VVC, the Temporal Motion Vector Prediction (TMVP) for the Affine Motion Vector Prediction (AMVP) and merge mode is derived by fetching the motion information from the center or the bottom-right of the collocated block in a signaled collocated picture (ex: FIG.4B). Similarly, for the Subblock-based Temporal Motion Vector Prediction (SbTMVP) mode, the motion information from the left neighboring position is used as a motion shift, which is then employed to obtain TMVPs at sub-CU level.

In ECM, to further improve the coding efficiency of TMVP, two aspects are modified. Firstly, two collocated pictures are utilized which are the two reference frames with the least Picture Order Count (POC) distance relative to the to-be-coded frame. Secondly, the motion shift to locate TMVP is adaptively determined from multiple locations (see Figure 5) according to template costs. More specifically, two motion shift candidate lists are constructed respectively for the two collocated frames. The motion shifts with the minimum template matching cost are used to derive SbTMVP or TMVP candidates.

### Affine candidates derived from temporal collocated pictures

In ECM (Enhanced Compression Model), affine candidates derived from temporal collocated pictures are added to the affine merge candidate list. The same sampling pattern from the regular inter merge mode is reused to scan the predefined positions in the collocated pictures to derive the temporal affine candidates.

If the scanned position belongs to an affine coded CU, a new affine candidate is derived by scaling its CPMVs to the current CU based on its position and block-size in the collocated picture and the derived new affine candidates are inserted into the existing affine merge list and reordered together with the other affine merge candidates by Adaptive Reordering of Merge Candidates (ARMC) process.

### MV refinement for TMVP

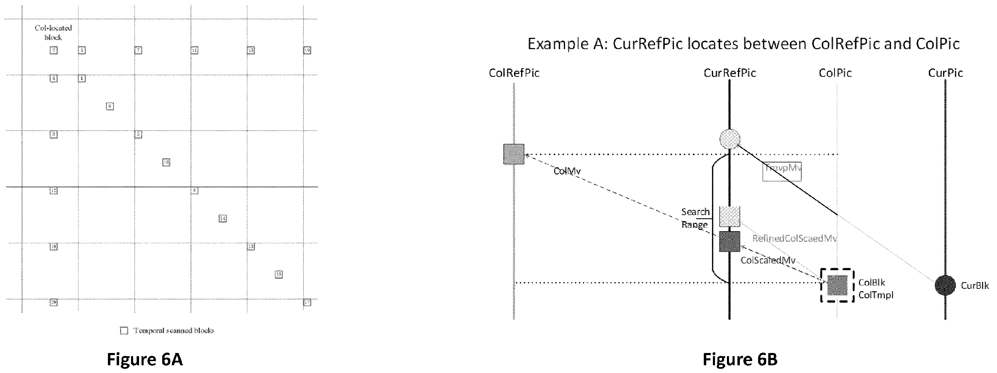

In ECM, the derived TMVP is refined. The refinement process is to find a MV in a reference picture (CurRefPic) which has the minimum SATD (Sum of Absolute Transformed Differences) or SAD (Sum of Absolute Differences) cost (830) between a reference template in CurRefPic and the collocated template (ColTmpl) in the collocated picture (ColPic) as depicted in Figure 6a and 6b, which also shows the current picture, "CurPic". The size of ColTmpl is up to 16x16, which is derived from grouping similar 4x4 blocks surrounding the collocated block (ColBlk) in ColPic.

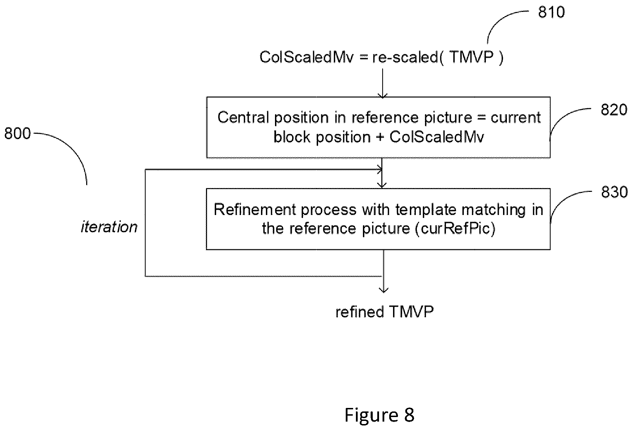

The refinement starting point (ColScaledMv) (820 in Figure 8) is derived from the collocated MV (ColMv in Figure 6b) in the collocated reference picture (ColRefPic) with scaling (810). The scaling factor is: $\left(pocRef-pocCol\right) / \left(pocColRef-pocCol\right)$

The state-of-art for deriving the temporal MV candidates has the following issues:
1. **Motion field may be not spatially homogeneous:** The principle of deriving Mv from the collocated block in another picture (signaled collocated picture) is based on the assumption that the motion field is roughly constant both (locally) spatially and temporally.

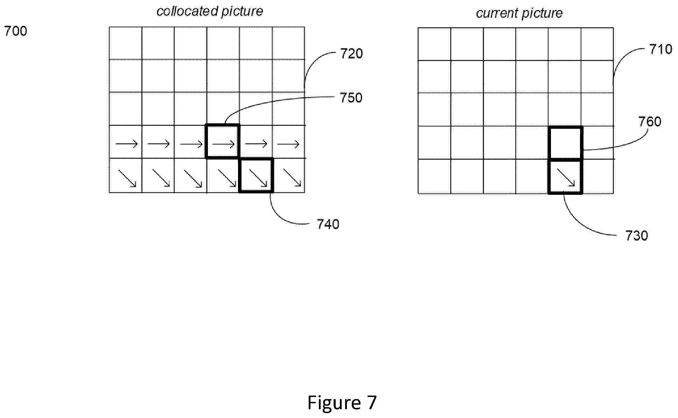

   Figure 7 depicts an example where the motion field is not homogeneous (720). The TMVP (the collocated Mv (740)) applied to the current block (730) corresponds to block (750) in the collocated picture. But this block (750) has been reconstructed with another vector corresponding to the block (760) if projected into the current picture.
2. **Using template increases inter block dependency:** In ECM, the candidates may be derived from different positions for deriving the best TMVP, but the selection of the best TMVP uses the template cost, that requires waiting for the neighboring block coded in inter is fully reconstructed, which may induce unacceptable latency for practical implementation.
3. **Motion field may be not temporally homogeneous:** In ECM, the TMVP is refined to consider the temporal variation of the motion field, but not the spatial inhomogeneity.

The present embodiments propose to improve the derivation of the temporal motion vector predictor.
Embodiment 1: Spatial refinement of the collocated TMVP using backward and forward projections of positions into collocated and current pictures.
Embodiment 2: Backward projection with TMVP of central point.
Embodiment 3: Combination with temporal refinement.
Embodiment 4: Set of positions defined in the (grid of the) collocated picture
Embodiment 5: Derivation of set of positions with other coding parameters.
Embodiment 6: spatial refinement of TMVP

### Embodiment 1 - Refining TMVP with forward projection (spatial refinement)

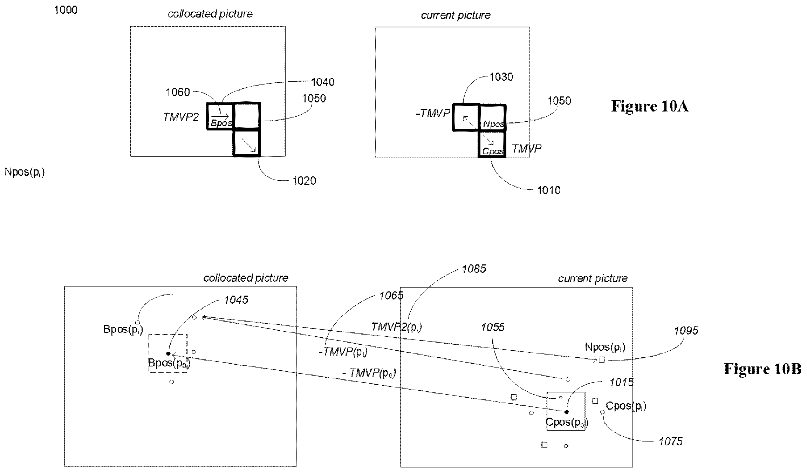

In this embodiment, one refines the re-scaled TMVP with backward and forward projection into the current picture. The basic process of backward and forward projection is depicted in FIG.10A and FIG.10B:
1) Back projection of the current block position p₀=Cpos (1010, 1015) with - TMVP(p₀) in the collocated picture to obtain a new position Bpos(p₀) (1040,1045).
2) Forward projection of the point at Bpos(p₀) with motion TMVP2 (1060,1065) stored at position Bpos(p₀) in the collocated picture and re-scaled similarly as (Equation 1) to obtain new position Npos(p₀) (1050,1055) in the current picture.
3) Compute distance D=(Npos,Cpos)

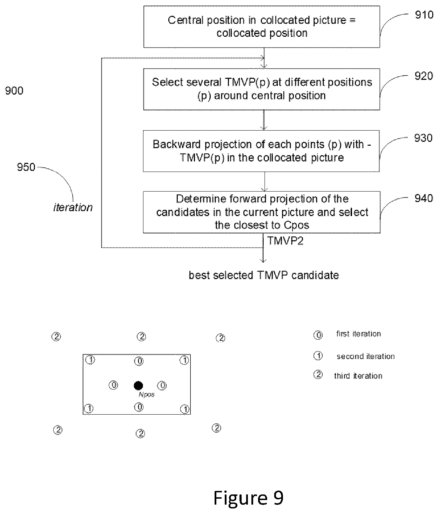

This basic process may be repeated for several positions "p_{i=0...n}" around the central position Cpos(p₀) (920,1075) (see example in Figures 9 and 10) and select the value TMVP2(pᵢ) obtained with the position "pᵢ" with minimal distance D=(Npos(pᵢ),Cpos(pᵢ)) (940). The Cpos(p₀) may be not the center of the current block but a pre-defined displaced position (ex: BR in FIG.4B). This process may be iterated (950) with new set of positions around Npos(p₀), the range of the set of new positions being contracted around Npos(p₀) compared to the previous iteration, as depicted in example of FIG.9 (bottom). The iteration may stop if the distance D is below a threshold. Finally, the refined TMVP (TMVP2) is re-scaled with the POCs of the current picture and the current reference index (see Equation 1).

### Embodiment 2 - Backward projection with TMVP of the central point

In this variant, the selected points around Cpos(p₀) are back-projected with same value of - TMVP(p) = - TMVP(p₀) derived for the Cpos.

### Embodiment 3 - Combination with temporal refinement

The embodiment 1 may be combined with the temporal refinement of TMVP. The value of TMVP2 may be re-fined temporally using the method described in the section on "MV refinement for TMVP". The block template may be the collocated block in the collocated picture or the block at position Bpos in the collocated picture. The starting point "ColScaledMv" is the re-scaled value of TMVP2 with (eq.2).

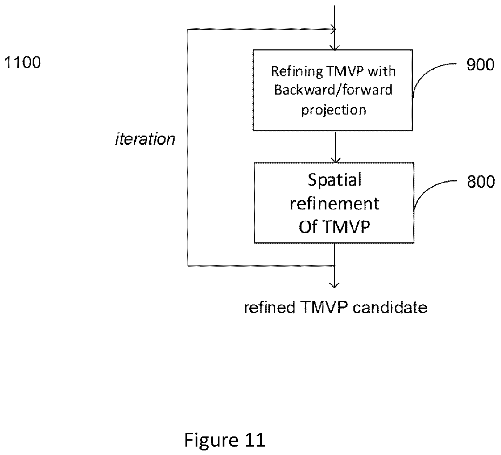

The first process may be spatial refinement (800) or the temporal refinement (900). Several iterations may be done as depicted in Figure 11.

### Embodiment 4 - set of position to forward project defined in the collocated picture

The set of positions (1220) may be defined around Bpos(p₀) (1210), in the (grid of the) collocated picture. Then the positions different from Cpos(p₀) (1230) are not back-projected but selected directly in the collocated picture. This allows to avoid selecting identical positions since the MV storage may be subsampled relatively to the (luma) component samples.

### Embodiment 5 - Derivation of set of positions with other coding parameters

The set of relative positions around Bpos(p₀) (1220) in the collocated picture may be derived with some other coding parameters such as the current block size (width/height), the motion vectors used to reconstruct some neighboring blocks (or in the MV history candidates) after re-scaling to the POC of the collocated picture. Several Bpos may be used in the set of positions if the stream implements multiple collocated reference pictures.

In a variant, the list of MV candidates in the merge list (and/or MV candidates in the MV history candidates and/or MV candidates in the spatial neighborhood of the current block) are used to define the set of relative positions around Bpos(p₀) as follows:
1) re-scale the MV-candidate to the POC of the collocated picture
2) the position Bpos(pᵢ) in the collocated picture is the displaced (Cpos or position of the neighborhood candidate Cpos(pᵢ)) re-scaled MV-candidates in the collocated reference picture
3) determine TMVP2(pᵢ) at position Bpos(pᵢ) and forward projection of the block at Bpos(p₀) with motion TMVP2 (1060,1065) stored at position Bpos in the collocated picture and re-scaled similarly as (eq.1) to obtain new position Npos(p₀) (1050,1055) in the current picture.
4) Select the value of TMPVP2 corresponding to the value Npos which is the closest to Cpos(p₀) (same as (940)).

In another variant, the value TMVP2(pᵢ) is derived as the collocated MV at the position of the neighboring block Cpos(pᵢ) from which this MV candidate have been derived.

### Embodiment 6 - spatial refinement of TMVP

The forward projection of the points Bpos(pi) (1210,1220) in the collocated picture with the motion vector TMVP2(pi) (re-scaled with (eq.1)) are the points Npos(pi) (1240,1250) respectively in the current picture. The refined value of TMVP2 (refined temporal motion vector for the current block, 1205) may be interpolated by modelling TMVP2 as a spatial function as follows: $TMVP 2 \left(x, y\right) = a . x + b . y + c$

The values of (a,b,c) may be derived with MSE algorithm: $\left(a, b, c\right) = arg min \left\{{\sum }_{i = 0}^{n} {\left(TMVP2\left({x}_{i}, {y}_{i}\right)-a.{x}_{i}-b.{y}_{i}-c\right)}^{2}\right\}$ Where: Npos(pᵢ) = (xᵢ,yᵢ)

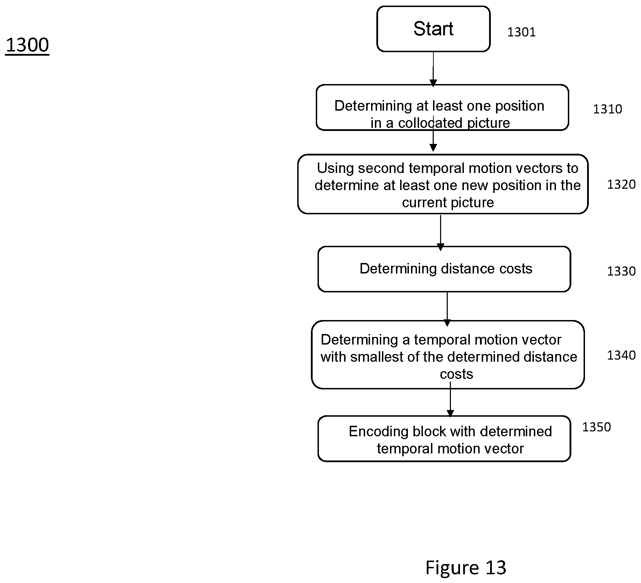

One embodiment of a method 1300 under the general aspects described here is shown in Figure 13. The method commences at start block 1301 and control proceeds to block 1310 for determining at least one position in a collocated picture from original positions around a central position in a block of a current picture using corresponding first temporal motion vectors. Control proceeds from block 1310 to block 1320 for using at least one second temporal motion vector associated with the at least one position in the collocated picture to determine at least one new position in the current picture. Control proceeds from block 1320 to block 1330 for determining distance costs between each of the at least one new position in the current picture and the corresponding central positions in the block of a current picture. Control proceeds from block 1330 to block 1340 for determining a temporal motion vector from the at least one second temporal motion vector associated with the at least one new position in the current picture having a smallest of the determined distance costs. Control proceeds from block 1340 to block 1350 for encoding the block using the determined temporal motion vector.

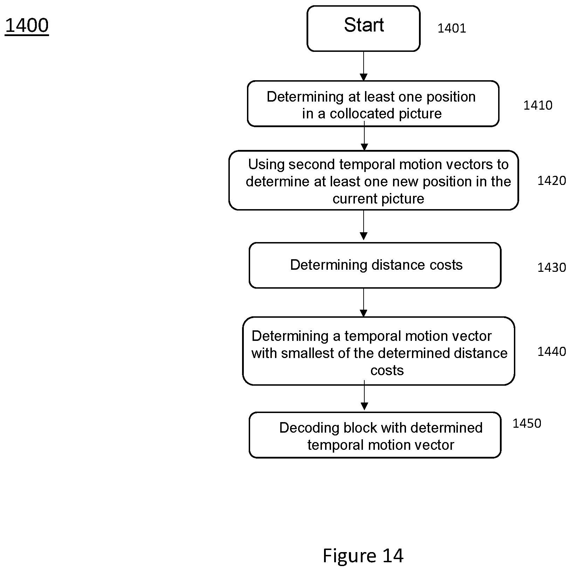

One embodiment of a method 1400 under the general aspects described here is shown in Figure 14. The method commences at start block 1401 and control proceeds to block 1410 for determining at least one position in a collocated picture from original positions around a central position in a block of a current picture using corresponding first temporal motion vectors. Control proceeds from block 1410 to block 1420 for using at least one second temporal motion vector associated with the at least one position in the collocated picture to determine at least one new position in the current picture. Control proceeds from block 1420 to block 1430 for determining distance costs between each of the at least one new position in the current picture and the corresponding central positions in the block of a current picture. Control proceeds from block 1430 to block 1440 for determining a temporal motion vector from the at least one second temporal motion vector associated with the at least one new position in the current picture having a smallest of the determined distance costs. Control proceeds from block 1440 to block 1450 for decoding the block using the determined temporal motion vector.

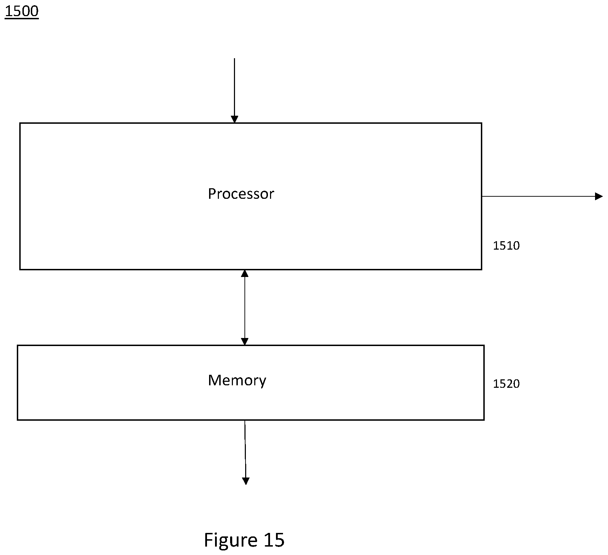

Figure 15 shows one embodiment of an apparatus 1500 for encoding, decoding, compressing or decompressing, or filtering of video data using the aforementioned methods. The apparatus comprises Processor 1510 and can be interconnected to a memory 1520 through at least one port. Both Processor 1510 and memory 1520 can also have one or more additional interconnections to external connections.

Processor 1510 is also configured to either insert or receive information in a bitstream and, either compressing, encoding, decoding, or quantizing using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description and does not limit the application or scope of those aspects. Indeed, all of the different aspects can be combined and interchanged to provide further aspects. Moreover, the aspects can be combined and interchanged with aspects described in earlier filings as well.

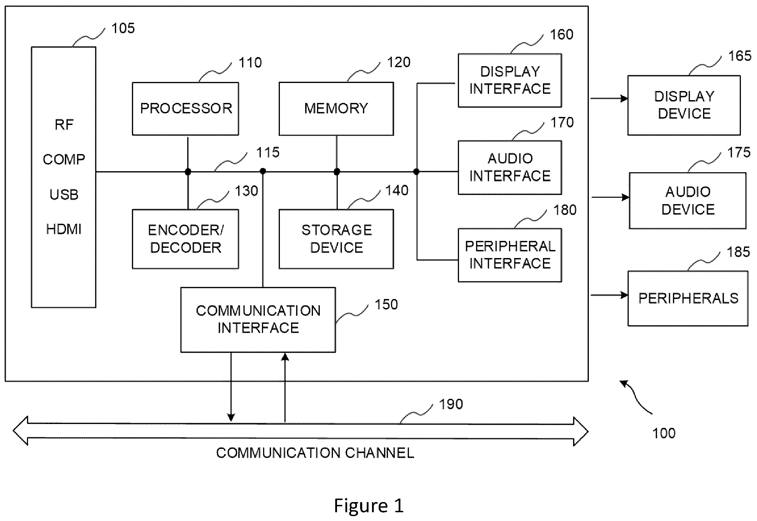

The aspects described and contemplated in this application can be implemented in many different forms. Figures 1, 2, and 3 provide some embodiments, but other embodiments are contemplated and the discussion of Figures 1, 2, and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

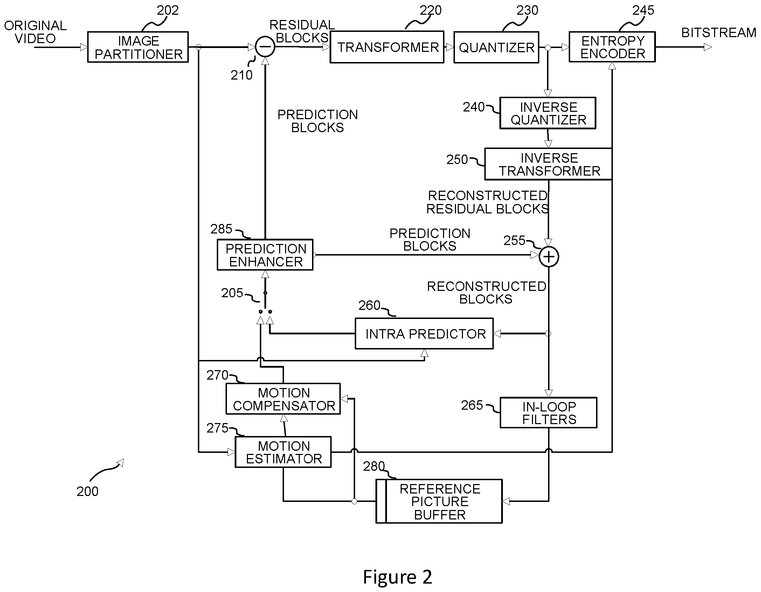

Various methods and other aspects described in this application can be used to modify modules, for example, the intra prediction, entropy coding, and/or decoding modules (160, 260, 145, 230), of a video encoder 100 and decoder 200 as shown in Figure 1 and Figure 2. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application. The specific values are for example purposes and the aspects described are not limited to these specific values.

Figure 2 illustrates an encoder 200. Variations of this encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

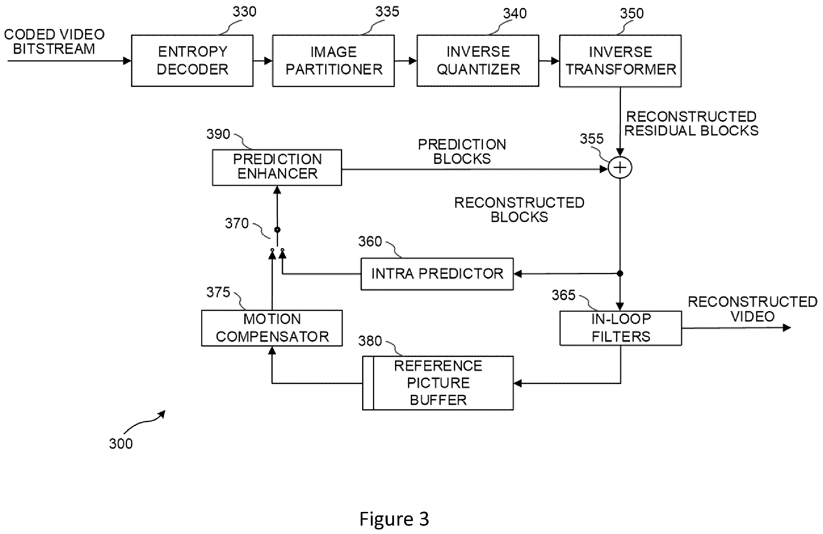

Figure 3 illustrates a block diagram of a video decoder 300. In the decoder 300, a bitstream is decoded by the decoder elements as described below. Video decoder 300 generally performs a decoding pass reciprocal to the encoding pass as described in Figure 3. The encoder 200 also generally performs video decoding as part of encoding video data.

In particular, the input of the decoder includes a video bitstream, which can be generated by video encoder 100. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g. conversion from YcbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Figure 1 illustrates a block diagram of an example of a system in which various aspects and embodiments are implemented. System 100 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, can be embodied in a single integrated circuit (IC), multiple ICs, and/or discrete components. For example, in at least one embodiment, the processing and encoder/decoder elements of system 100 are distributed across multiple ICs and/or discrete components. In various embodiments, the system 100 is communicatively coupled to one or more other systems, or other electronic devices, via, for example, a communications bus or through dedicated input and/or output ports. In various embodiments, the system 100 is configured to implement one or more of the aspects described in this document.

The system 100 includes at least one processor 110 configured to execute instructions loaded therein for implementing, for example, the various aspects described in this document. Processor 110 can include embedded memory, input output interface, and various other circuitries as known in the art. The system 100 includes at least one memory 120 (e.g., a volatile memory device, and/or a non-volatile memory device). System 100 includes a storage device 140, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 140 can include an internal storage device, an attached storage device (including detachable and non-detachable storage devices), and/or a network accessible storage device, as non-limiting examples.

System 100 includes an encoder/decoder module 130 configured, for example, to process data to provide an encoded video or decoded video, and the encoder/decoder module 130 can include its own processor and memory. The encoder/decoder module 130 represents module(s) that can be included in a device to perform the encoding and/or decoding functions. As is known, a device can include one or both of the encoding and decoding modules. Additionally, encoder/decoder module 130 can be implemented as a separate element of system 100 or can be incorporated within processor 110 as a combination of hardware and software as known to those skilled in the art.

Program code to be loaded onto processor 110 or encoder/decoder 130 to perform the various aspects described in this document can be stored in storage device 140 and subsequently loaded onto memory 120 for execution by processor 110. In accordance with various embodiments, one or more of processor 110, memory 120, storage device 140, and encoder/decoder module 130 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device can be either the processor 110 or the encoder/decoder module 130) is used for one or more of these functions. The external memory can be the memory 120 and/or the storage device 140, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 100 can be provided through various input devices as indicated in block 105. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 1, include composite video.

In various embodiments, the input devices of block 105 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 100 to other electronic devices across USB and/or HDMI connections. It is to be understood that various aspects of input processing, for example, Reed-Solomon error correction, can be implemented, for example, within a separate input processing IC or within processor 110 as necessary. Similarly, aspects of USB or HDMI interface processing can be implemented within separate interface Ics or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 100 includes communication interface 150 that enables communication with other devices via communication channel 160. The communication interface 150 can include, but is not limited to, a transceiver configured to transmit and to receive data over communication channel 160. The communication interface 150 can include, but is not limited to, a modem or network card and the communication channel 160 can be implemented, for example, within a wired and/or a wireless medium.

Data is streamed, or otherwise provided, to the system 100, in various embodiments, using a wireless network such as a Wi-Fi network, for example IEEE 802.11 (IEEE refers to the Institute of Electrical and Electronics Engineers). The Wi-Fi signal of these embodiments is received over the communications channel 160 and the communications interface 150 which are adapted for Wi-Fi communications. The communications channel 160 of these embodiments is typically connected to an access point or router that provides access to external networks including the Internet for allowing streaming applications and other over-the-top communications. Other embodiments provide streamed data to the system 100 using a set-top box that delivers the data over the HDMI connection of the input block 105. Still other embodiments provide streamed data to the system 1000 using the RF connection of the input block 105. As indicated above, various embodiments provide data in a non-streaming manner. Additionally, various embodiments use wireless networks other than Wi-Fi, for example a cellular network or a Bluetooth network.

The system 100 can provide an output signal to various output devices, including a display 165, speakers/audio device 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or another device. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100. For example, a disk player performs the function of playing the output of the system 100.

In various embodiments, control signals are communicated between the system 100 and the display 165, speakers/audio device 175, or other peripheral devices 185 using signaling such as AV.Link, Consumer Electronics Control (CEC), or other communications protocols that enable device-to-device control with or without user intervention. The output devices can be communicatively coupled to system 100 via dedicated connections through respective interfaces 160, 170, and 180. Alternatively, the output devices can be connected to system 100 using the communications channel 190 via the communications interface 150. The display 165 and speakers/audio device 175 can be integrated in a single unit with the other components of system 100 in an electronic device such as, for example, a television. In various embodiments, the display interface 160 includes a display driver, such as, for example, a timing controller (T Con) chip.

The display 165 and speakers/audio device 175 can alternatively be separate from one or more of the other components, for example, if the RF portion of input 105 is part of a separate set-top box. In various embodiments in which the display 165 and speakers/audio device 175 are external components, the output signal can be provided via dedicated output connections, including, for example, HDMI ports, USB ports, or COMP outputs.

The embodiments can be carried out by computer software implemented by the processor 110 or by hardware, or by a combination of hardware and software. As a non-limiting example, the embodiments can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:
At least one embodiment comprises refining a temporal motion vector with forward projection (spatial refinement).

At least one embodiment comprises the above embodiment further comprising a backward projection with temporal motion vector predictor of a central point.

At least one embodiment comprises the above embodiments and further comprising a temporal refinement.

At least one embodiment comprises the above embodiments and further comprising a set of positions to forward project defined in a collocated picture.

At least one embodiment comprises and further comprising deriving a set of positions using other coding parameters.

At least one embodiment comprises and further comprising a spatial refinement of a temporal motion vector.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

## Claims

1. A method, comprising:
determining at least one position in a collocated picture from original positions around a central position in a block of a current picture using corresponding first temporal motion vectors;
using at least one second temporal motion vector associated with the at least one position in the collocated picture to determine at least one new position in the current picture;
determining distance costs between each of the at least one new position in the current picture and the central positions in the block of the current picture;
determining a temporal motion vector from the at least one second temporal motion vector associated with the at least one new position in the current picture having a smallest of the determined distance costs; and,
encoding the block using the determined temporal motion vector.

2. An apparatus comprising a memory and a processor, configured for:
determining at least one position in a collocated picture from original positions around a central position in a block of a current picture using corresponding first temporal motion vectors;
using at least one second temporal motion vector associated with the at least one position in the collocated picture to determine at least one new position in the current picture;
determining distance costs between each of the at least one new position in the current picture and the central positions in the block of the current picture;
determining a temporal motion vector from the at least one second temporal motion vector associated with the at least one new position in the current picture having a smallest of the determined distance costs; and,
encoding the block using the determined temporal motion vector.

3. A method, comprising:
determining at least one position in a collocated picture from original positions around a central position in a block of a current picture using corresponding first temporal motion vectors;
using at least one second temporal motion vector associated with the at least one position in the collocated picture to determine at least one new position in the current picture;
determining distance costs between each of the at least one new position in the current picture and the central positions in the block of the current picture;
determining a temporal motion vector from the at least one second temporal motion vector associated with the at least one new position in the current picture having a smallest of the determined distance costs; and,
decoding the block using the determined temporal motion vector.

4. An apparatus comprising a memory and a processor, configured for:
determining at least one position in a collocated picture from original positions around a central position in a block of a current picture using corresponding first temporal motion vectors;
using at least one second temporal motion vector associated with the at least one position in the collocated picture to determine at least one new position in the current picture;
determining distance costs between each of the at least one new position in the current picture and the central positions in the block of the current picture;
determining a temporal motion vector from the at least one second temporal motion vector associated with the at least one new position in the current picture having a smallest of the determined distance costs; and,
decoding the block using the determined temporal motion vector.

5. The method of any one of Claims 1 or 3, or the apparatus of any one of Claims 2 or 4, wherein the at least one position in the collocated picture from the original positions around the central position in the block use a temporal motion vector of the central position.

6. The method of any one of Claims 1, 3, or 5, or the apparatus of any one of Claims 2, 4, or 5 further comprising scaling of the second temporal motion vector.

7. The method of any one of Claims 1,3, 5, or 6, or the apparatus of any one of Claims 2, 4, 5, or 6, further comprising refining the at least one second temporal motion vector using a second collocated picture.

8. The method of any one of Claims 1,3, or 5 through 7, or the apparatus of any one of Claims 2, 4, or 5 through 7, wherein one or more positions in the collocated picture are determined from one central position in the block of the current picture.

9. The method or the apparatus of Claim 8, wherein the determination of one or more positions in from one central position in the block of the current picture is additionally based on other coding parameters.

10. The method of any one of Claims 1,3, or 5 through 9, or the apparatus of any one of Claims 2, 4, or 5 through 9, wherein the at least one second temporal motion vector is interpolated.

11. A device comprising:
the apparatus according to Claim 2; and
at least one of (i) an antenna configured to receive a signal, the signal including a video signal, (ii) a band limiter configured to limit the received signal to a band of frequencies that includes a video block, and (iii) a display configured to display an output representative of the video block.

12. A non-transitory computer readable medium containing data content generated according to the method of any one of claims 1, or 3 through 10, or by the apparatus of any one of claims 2, or 2 through 3, for playback using a processor.

13. A signal comprising video data generated according to the method of any one of claims 1, or 3 through 10, or by the apparatus of any one of claims 2, or 3 through 10, for playback using a processor.

14. A non-transitory computer program product comprising instructions which, when the instructions are executed by a computer, cause the computer to carry out the method of any one of claims 1 or 3 through 10.
